# EUROPÄISCHE PATENTSCHRIFT

(11) **EP 1 884 506 B1**
(45) Veröffentlichungstag und Bekanntmachung des Hinweises auf die Patenterteilung: **22.08.2012**
(21) Anmeldenummer: 07014155.1
(22) Anmeldetag: 19.07.2007
(51) Int. Cl.: C05G 3/00

(54) **Verfahren zur Granulierung von Ammoniumsulfat und ammoniumsulfatreichen mineralischen Düngemitteln**
Method for granulation of ammonium sulphate and mineral fertiliser rich in ammonium sulphate
Procédé destiné à la granulation de sulfate d'ammonium et d'engrais minéraux comportant du sulfate d'ammonium

(30) Priorität: 27.07.2006 DE 102006034623
(43) Veröffentlichungstag der Anmeldung: 06.02.2008
(73) Patentinhaber: K+S Aktiengesellschaft, 34111 Kassel (DE)
(72) Erfinder: Hoche, Antje, 36404 Vacha (DE); Naundorf, Wolfgang, Prof. Dr., 09599 Freiberg (DE); Stahl, I. Prof. Dr., 34246 Vellmar (DE)

(56) Entgegenhaltungen:
- WO-A1-2010/012635
- DE-A1- 1 592 620
- DE-A1- 4 126 802
- DE-A1- 4 126 804
- DE-A1- 4 126 808

## Beschreibung

Ammoniumsulfat hat im feinkörnigem Anfallzustand für die Verwendung als Düngestoff aus unterschiedlichen Gründen ungünstige Eigenschaften. Durch seine sehr hohe Hygroskopizität wird es schon bei geringer Wasseraufnahme z.B. aus der Luft oberflächenfeucht und partiell fließfähig, was zur schnellen Verkrustung während der Lagerung führt. Das ist selbst dann der Fall, lediglich zeitlich verlangsamt, wenn das Ammoniumsulfat vorher allein granuliert wurde.

Nachteilig ist zudem, dass das Ammoniumsulfat unter Druck zur Fließverformung neigt und schon bei geringer Druckbelastung nach kurzer Zeit großflächig verklumpte Massen ausbildet, die vor dem Verstreuen auf die Felder mit großem Aufwand wieder dispergiert werden müssen.

Ammoniumsulfat hat des Weiteren die negative Eigenschaft, dass es bei der Pressverdichtung mit hohem Pressdrücken zwar dichte, aber relativ weiche und zur plastischen Verformung neigende Presslinge ausbildet. Bei der Pressverdichtung mit hohen Pressdrücken von ≥ 100 MPa, die beim Kompaktur-/Zerkleinerungs-Verfahren zur Anwendung kommen, treten die Druck-Fließ-Verformungen stark in der Kompressionsphase auf. Die Folge davon ist, dass bei der Verpressung des Ammoniumsulfates mit den Doppelwalzenpressen Schülpen in schlechter Qualität und großen Unterschieden in der Verdichtungsintensität entstehen. Da die Folien außerdem relativ weich sind und bei der Zerkleinerung im Moment der Schlägereinwirkung zusätzlich lokal druckplastisch werden, entstehen beim Kompaktier-/Zerkleinerungs-Verfahren zumeist Granulate in geringer Massenausbeute und in unbefriedigender Qualität. Im Patent EP 0 621 800 B1 wird deshalb vorgeschlagen, die ungünstigen Verpressungseigenschaften durch den Zusatz von fein zerfasertem Altpapier und /oder Karton zu verbessern. Der dabei erreichte positive Effekt muss aber durch verschlechterte Zerkleinerungseigenschaften der gepressten Schülpen erkauft werden, die wegen der Fasern schlecht brechen.

Des Weiteren ist für die Granulierung des Ammoniumsulfates auch das Verfahren der Aufbauagglomeration durch Rollgranulierung mit Pelletiertellern oder Pelletiertrommeln nicht geeignet, weil das Ammoniumsulfat schon beim Kontakt mit geringen Mengen an Pelletierflüssigkeit, die verfahrensbedingt auf das Pelletiergut aufgesprüht werden muss, oberflächenfeucht bis matschig wird, so dass große Düngerklumpen entstehen und das Ammoniumsulfat stark an den Wandungen der Pelletierapparate anklebt.

Ein Teil der Düngemittel kann durch Erwärmung in der Pelletiertrommel granuliert werden. Diese Verfahrensvariante führt dann zum Erfolg, wenn der Düngestoff oder eine Mischkomponente des Düngers durch Erwärmung klebrig und damit bindend wird. Diese Verfahrensvariante ist beim Ammoniumsulfat ebenfalls nicht anwendbar, weil es unzureichende Bindeeigenschaften hat und zudem schnell großstückig verklumpt. Das Verfahren ist aber auch deshalb nicht für die Granulierung von Ammoniumsulfat geeignet, weil bei der Erwärmung mit steigender Temperatur die Emission von Ammoniak durch Desorption und Zersetzung stark ansteigt.

Die oben genannten Nachteile treten auch bei Gemischen aus unterschiedlichen Mineraldüngern auf, wenn der Anteil des Ammoniumsulfates so hoch ist, dass es dominant die Eigenschaft des gesamten Mischgutes prägt. Das beginnt auf jeden Fall ab Anteilen an Ammoniumsulfat von über 50 Ma-%. Der Anteil des Ammoniumsulfates wird deshalb bei vielen Granulierverfahren so niedrig eingestellt, dass die Granuliereigenschaften des Mischgutes dominierend von den anderen gut agglomerierbaren Düngerstoffen bestimmt werden.

Des Weiteren gibt es Verfahrensvorschläge (Patent DD 251 970 A1), bei denen das Ammoniumsulfat für die Herstellung von Depot-Düngerstoffen verwendet wird. Bei dieser Verfahrensvariante wird das Ammoniumsulfat in einen festen und dichten Matrixverbund eingeschlossen, der die Auflösegeschwindigkeit des Düngers verringert. Dafür werden größere Anteile an Zusatzstoffen mit günstigen Brikettiereigenschaften benötigt, die zudem wegen ihres hohen Anteils die Verpressungseigenschaften des Mischgutes bestimmen. Nach dem oben genannten Patent wird das durch das Vermischen von Ammoniumsulfat mit 10 bis 50 Ma-% getrockneter Brauntrockneter Braunkohle mit spezifischen Stoffeigenschaften erreicht. Dafür wird eine Braunkohle mit einem Teergehalt von mindestens 8 % (wasserfrei), einem Xylitgehalt von kleiner 5 % (wasserfrei) und einem Na₂O-Gehalt von kleiner 0,2 % (wasserfrei) benötigt, die dominierend aus den Lithotypen "Gelbe Kohle" und "Braune Kohle" mit einem Gesamtanteil von größer 70 % besteht, und die einen niedrigen Feuchtegehalt von kleiner 22 % und eine Korngröße von kleiner 0,4 mm aufweist. Nachteilig ist der hohe Aufwand für die Durchführung des Verfahrens, weil die getrocknete Braunkohle, wie es das bekannte Verfahren der Braunkohlenbrikettierung zu Briketts bestätigt, nur dann fest und hart wird, wenn sie mit hohen Pressdrucken von vorzugsweise größer 100 MPa verpresst wird. Ein weiterer großer Nachteil des Verfahrens besteht darin, dass bei der Zerkleinerung der gepressten Schülpen zu Granulat ein großer Anteil an feinkörnigem Brikettgrus mit den darin enthaltenen Düngesalz anfällt, der nicht im Kreislauf zur Wiederverpressung geführt werden kann, weil der Brikettgrus bekanntlich keine Brikettiereigenschaften mehr hat. Der in hohen Anteilen anfallende stark staubende Brikettgrus ist ein lästiges und minderwertiges Nebenprodukt mit erhöhtem Gehalt an Düngersalz.

DE-A-41 26 802 betrifft ein Verfahren zur Herstellung von granuliertem Ammoniumsulfat, wobei hochdisperses Siliziumdioxid oder Tone zugesetzt werden. Die Mischung wird kompaktiert und granuliert. Anschließend werden die tonhaltigen Granulate bei 100 bis 200°C thermisch nachbehandelt. Auch ohne die thermische Nachbehandlung werden bereits Zunahmen der Kornfestigkeit beobachtet.

DE-A-41 26 804 betrifft ein Verfahren zur Herstellung von granuliertem Ammoniumsulfat, wobei Stärke oder Stärke-Derivate als Hilfsstoff zugegeben werden. Erst nach der Kompaktierung werden die Zusammensetzungen durch Luftfeuchtigkeit nachgehärtet, siehe Tabelle 4. Auch eine thermische Nachbehandlung bei 110 bis 175°C kann durchgeführt werden.

DE-A-41 26 808 betrifft ebenfalls ein Verfahren zur Herstellung von granuliertem Ammoniumsulfat, wobei Mischungen aus Blauton, Harnstoff und Stärke, oder aus Harnstoff, Dimethylharnstoff und Blauton oder hochdispersem Siliziumdioxid oder Polyvinylalkohol als Hilfsstoff zugegeben werden. Das hergestellte Granulat wird nach der Kompaktierung thermisch bei 140 bis 200°C nachbehandelt, um ausreichende Festigkeitswerte zu erhalten.

Aufgabe der Erfindung ist die Entwicklung eines Verfahrens, mit dem Ammoniumsulfat auf einfache Weise, mit geringen Kosten, mit hoher Stabilität in der Betriebsführung und ohne Anfall von Prozessnebenprodukten zu einem hochwertigen Granulat agglomeriert werden kann, ohne dass beim Kompaktieren eine Fließverformung eintritt. Das Granulat soll sich durch gleichmäßige Qualität, hohe Festigkeit und Härte, geringe Verklumpungsneigung während der Lagerung unter geschützten Bedingungen sowie gute Verstreueigenschaften mit der Großgerätetechnik und durch vorteilhafte Auflöseeigenschaften im Boden mit lang anhaltender und richtig dosierter Verfügbarkeit des Düngers für die Pflanzen und ohne der Gefahr der Grund- und Oberflächengewässerbelastung mit Dünger auszeichnen.

Erfindungsgemäß wird die Aufgabe in einem Verfahren gemäß Anspruch 1 dadurch gelöst, dass das feinkörnige Ammoniumsulfat mit modifizierend wirkenden Hilfsstoffen in Form von Feststoffen vermischt wird, die eine Eigenschaftsveränderung bewirken.

Die modifizierend wirkenden Hilfsstoffe haben die Aufgabe, die wichtigsten negativen Eigenschaften des Ammoniumsulfates so bleibend zu verändern, dass die Granulierung möglich wird und die gute Qualität des Granulates auch während der Lagerung erhalten bleibt. Die wichtigsten Veränderungen betreffen die Vermeidung der Fließfähigkeit bei geringer Befeuchtung, die Erhöhung der Strukturhärte nach der Verdichtung, die Vermeidung der Emission von Ammoniak bei geringer Erwärmung und eine genügende Minderung der hygroskopischen Eigenschaften.

Das wird erfindungsgemäß durch den Zusatz von Hilfsstoffen erreicht, die mit dem Ammoniumsulfat zu hinreichend intensiven physikalischen und chemisorptiven Reaktionen befähigt sind und dadurch die erforderliche Eigenschaftsveränderung bewirken. Es müssen zudem unbedingt Feststoffe sein, weil das Ammoniumsulfat beim Zusatz von Lösungen oder Dispersionen sofort fließfähig würde und die erforderliche Eigenschaftsveränderung nicht mehr möglich wäre. Die zugesetzten Feststoffe müssen sofort wirksam werden und am Ammoniumsulfat fest haften.

Erfindungsgemäß sind für die modifizierende Veränderung des Ammoniumsulfates viele anorganische und organische Stoffe oder Stoffgemische mit hohen Gehalten an Hydroxyl- und/oder Carboxylgruppen geeignet, die feinkörnig und vorzugsweise pulverförmig sind, beziehungsweise in diesen Zustand überführt werden können. Die Hydroxyl- und/oder Carboxylgruppen verleihen den Hilfsstoffen die erforderliche polare Ladung und/oder die erforderliche Reaktivität, damit zwischen ihnen sowie den Ammonium- und Sulfationen des Ammoniumsulfates die erforderlichen physikalischen, chemisorptiven und bei den Carboxylgruppen auch in bestimmtem Umfang chemischen Reaktionen für die Modifizierung und für die stabile Haftung ausgelöst werden können.

Des Weiteren wurde gefunden, dass nur solche Stoffe geeignet sind, die nicht nur modifizierend wirken, sondern zudem bei der späteren Druckformung des Mischgutes zu Granulatkörnern als Gleitmittel wirksam werden. Letztes deshalb, damit die Verdichtung des Mischgutes zu einem nahezu porenfreien Feststoffverbund nicht durch zu hohe Reibungswiderstände zwischen den beschichteten Ammoniumsulfatpartikeln untereinander und/oder zwischen den Partikeln und der Formwand der Verdichtungseinrichtung behindert wird.

Es sind zudem nur solche Stoffe geeignet, die das Ammoniumsulfat nicht nur modifizieren und als Gleitmittel wirken, sondern die nach der Druckformung des Mischgutes zusätzlich durch Verkrustung in sich aushärten und das Ammoniumsulfat vor zu schneller Aufnahme von Luftfeuchtigkeit schützen, damit das Granulat zumindest bei geschützter Lagerung nicht zerfällt und ohne Verklumpung dosier- und streufähig bleibt.

Die Stoffe müssen zusätzlich zu den bereits genannten Eigenschaften im feinkörnigen beziehungsweise pulverförmigen Zustand stark hygroskopisch sein. Das ist kein Widerspruch zu der oben genannten Anforderung an diese Stoffe, dass sie die fertigen Granulate vor zu schneller Aufnahme von Feuchtigkeit schützen müssen. Die Hilfsstoffe müssen beide Eigenschaften haben, weil sie im primären Pulverzustand noch keine ausreichende Gleitmittelwirkung haben und auch nicht in sich verkrusten können. Diese Eigenschaften erlangen sie erst, wenn sie durch partielle Befeuchtung in eine leicht teigige Masse überführt werden. Das Wasser darf aber nicht mit dem Ammoniumsulfat in Berührung kommen, weil das Wasser dann sofort von dem stark hygroskopischen Ammoniumsulfat aufgenommen würde. Das muss vermieden werden, weil sich sonst das Ammoniumsulfat in eine zur Verklumpung neigende Masse verwandelt.

Das Ammoniumsulfat muss deshalb in einem ersten Schritt in trockenem Zustand zunächst mit den pulverförmigen Hilfsstoffen vollständig und in dünner Schicht umhüllt werden. Das Pulver muss durch entsprechende Reaktionen sofort fest am Ammoniumsulfat haften und schon modifizierend wirksam werden. Nach Erreichen des stabilen Oberflächenverbundes zwischen dem Ammoniumsulfat und dem pulverförmigen Hilfsstoff sind die Voraussetzungen gegeben, dass in einem zweiten Schritt diese ursprünglich pulverförmigen Hilfsstoffe durch dosierte Befeuchtung mit Wasser oder Lösungen bzw. Dispersionen ihre partiell teigige Struktur bekommen und dadurch zum Gleitmittel werden sowie später verkrusten können. Die pulverförmigen Hilfsstoffe müssen deshalb in dieser Phase so hygroskopisch sein, dass sie das Wasser allein aufnehmen und das Ammoniuimsulfat durch die gleichmäßige Beschichtung vor dem Wasserzutritt schützen. Das Wasser muss deshalb in der Menge genau so bemessen werden, dass bei gleichmäßiger Verteilung gerade der jeweilige Hilfsstoff partiell teigig wird und das Wasser allein aufnimmt. Durch die nachträgliche Befeuchtung des Hilfsstoffes werden die modifizierend wirkenden Reaktionen in den Grenzzonen zwischen den Hilfsstoffen und dem Ammoniumsulfat nochmals intensiviert. Des Weiteren wirken die Hilfsstoffe bei der Druckformung des Mischgutes zunächst als Gleitmittel. Danach verhärten sie bei der Trocknung durch Verkrustung aus dem teigigem Zustand. Durch diese Eigenschaftsveränderungen verfestigen sie das Granulat und schützen es vor zu schneller Aufnahme von Luftfeuchtigkeit und verhindern so das Zusammenfließen des Düngers zu einer kompakten Masse.

Erfindungsgemäß erfüllen die erforderlichen Eigenschaften gut bindungsfähige Tone, Mehle aus Getreide, die in Getreidemühlen anfallenden Kleien, erdige feinkörnige Weichbraunkohlen in Form von nicht getrockneter Rohkohle, zu Pulver zerkleinerte ausgelaugte Zuckerrübenschnitzel und/oder getrocknetes Grüngut, und das jeweils allein oder als Stoffgemische.

Die Zugabemenge beträgt beim Zusatz von Tonpulver 4 bis 10 Masse % und vorzugsweise etwa 6 Masse %, beim Zusatz von Getreidemehlen oder Getreidekleien 3 bis 12 Masse % und vorzugsweise 5 bis 8 Masse % und bei Zusatz von nicht getrockneter Rohfeinkohle 15 bis 30 % und vorzugsweise 20 bis 30 %.

Eine weitere wichtige Voraussetzung für das Gelingen des Granulierverfahrens ist eine vollständige und gleichmäßige Umhüllung der Ammoniumsulfatpartikel mit den relativ kleinen Anteilen des Hilfsstoffes und die Ausbildung eines stabilen Haftverbundes zwischen den Oberflächen des Düngers und den Zusatzstoffen. Dafür ist eine geeignete Dosier- und Mischtechnik erforderlich. Für die Vermischung werden Turbulenzmischer benötigt, in denen das feinkörnige Ammoniumsulfat mit hoher Geschwindigkeit sowie zudem mit hohem Kontaktdruck und starker Relativbewegung zwischen den Partikeln bewegt wird. Des Weiteren muss das Ammoniumsulfat zuerst mit den feinkörnigen und vorzugsweise pulverförmigen Hilfsstoffen vermischt werden. Die pulverförmigen Hilfsstoffe müssen über einen längeren Zeitraum verteilt und in aufgewirbelter Form in den Mischer dosiert werden, damit alle Ammoniumsulfatpartikel die Chance zur gleichmäßigen Umhüllung durch die Hilfsstoffe erhalten. Vorübergehend zu viel angelagertes Pulver wird durch die Relativbewegung und den Reibdruck zwischen den Partikeln nachträglich vergleichmäßigt. Durch den Reibdruck wird zudem der Haftverbund zwischen den Partikeln des Düngers und des Hilfsstoffes verstärkt. Erst danach erfolgt die Befeuchtung mit Wasser, Lösungen und/oder Dispersionen ebenfalls über eine längere Zeitspanne in fein verdüster Form. Der Wasseranteil ist von der Art der Zusatzstoffe bzw. Zusatzstoffgemische abhängig und muss sehr genau eingehalten werden, damit kein überschüssiges Wasser zur Befeuchtung des Ammoniumsulfates zur Verfügung steht. Der Wasserbedarf beträgt bis zu 6 Masse %, beim Zusatz von Tonpulver mit einem Wassergehalt von W = 4 % etwa 0,8 bis 1,0 Prozent Wasser pro Prozent Ton und vorzugsweise 0,9 Prozent Wasser je Prozent Ton, beim Zusatz von Getreidemehlen und/oder Getreidekleine mit einem Wassergehalt von W = 10 % etwa 0,3 bis 1,0 Prozent Wasser pro Prozent Mehl oder Kleie und vorzugsweise 0,5 Prozent Wasser je Prozent Mehl oder Kleie und beim Zusatz von Rohfeinkohle mit einem Wassergehalt von W = 50 bis 55 % etwa 0,03 bis 0,1 Prozent Wasser pro Prozent Rohkohle und vorzugsweise 0,05 Prozent Wasser je Prozent Rohkohle.

Die Zeitspannen für die Zugabe der Hilfsstoffe und des Wassers sollten jeweils größer/gleich 25 % der Gesamtmischdauer von 2 bis 5 Minuten betragen. Für die Durchführung des Mischprozesses hat sich zum Beispiel der Eirichmischer bewährt.

Eine weitere Voraussetzung für die Herstellung von hochwertigem Granulat aus Ammoniumsulfat ist die Druckformung des Mischgutes. Durch die Druckformung wird das jeweils gewünschte Format der Granulatkörner geprägt. Des Weiteren ist für die Qualität des Granulates die Pressverdichtung der feinkörnigen Masse zu einem möglichst porenfreien Formkörper sehr wichtig. Der Verdichtungsdruck muss so hoch sein, dass das Ammoniumsulfat in der Phase der einwirkenden Druckspitze gerade so stark druckplastisch wird, dass die Partikel untereinander unter Einbindung der Beschichtungsstoffe bestmöglich verschmelzen. Dieser Vereinigungsprozess wird durch die Gleitmittelwirkung der befeuchteten Hilfsstoffe auch mit relativ niedrigen auf das Gut einwirkenden Pressdrücken von ≤ 25 MPa möglich. Das Wasser begünstigt zudem durch geringes Anlösen des Düngers die Reaktionen mit den Hilfsstoffen. Verbliebene kleine Hohlräume zwischen den Ammoniumsulfatpartikeln werden mit Lösungen oder Dispersionen ausgefüllt.

Die Druckformung und Verdichtung des mit Hilfsstoffen vorbehandelten Ammoniumsulfates wird erfindungsgemäß bestmöglich durch Verpressung mit Flachmatrizen-Pelletpressen erreicht. Das Mischgut wird dabei zu zylinderförmigen Preßlingen geformt. Der Durchmesser der Pellets wird durch Einsatz von Matrizen mit den jeweils erforderlichen Bohrungen bedarfsgerecht eingestellt. Die Art des Zusatzstoffes und die Intensität von dessen Befeuchtung bestimmen den Verschiebewiderstand des verdichteten Gutes im Formkanal und damit den Verdichtungsdruck. Eine hohe Pelletqualität wird nur erreicht, wenn zudem nur solche Flachmatrizenpressen verwendet werden, bei denen der Verdichtungsdruck durch einen gezielt einstellbaren Vordruck auf die Kollerwalzen der Pelletpresse eingestellt werden kann.

Die Festigkeit der Pellets ist nach der Druckformung mit der Flachmatrizen-Pelletpresse noch gering. Die angestrebte hohe Qualität hinsichtlich Festigkeit, Härte und verbesserten Lagereigenschaften erlangen die Pellets erst nach der Verdunstung des größten Teiles des vorher zugedüsten Wassers. Die Pellets erfahren bei der Trocknung eine erhebliche Eigenschaftsverbesserung durch Reaktionen zwischen den Hilfsstoffen und dem Ammoniumsulfat und durch die zur Verkrustung der teigigen Hilfsstoffe führenden Prozesse, durch Auskristallisation von gelösten Substanzen sowie durch den Versprödungsprozess des Ammoniumsulfates durch die modifizierende Wirkung der Hilfsstoffe und/oder durch den Wasserentzug. Dabei ist es von Vorteil, dass die Ammoniumsulfatpartikel während der Druckformung schon zu einem beachtlichen Teil durch druckplastische Fließprozesse besonders stabil verbunden wurden.

Die Verdunstung der geringen Wassermenge aus den Pellets wird durch Kaltbelüftung oder vorzugsweise durch Trocknung mit Warmluft erreicht, deren Temperatur 75°C nicht überschreiten darf, damit kein Ammoniak emittiert wird. Der Aushärtungsprozess ist abgeschlossen, wenn die Pellets einen Restwassergehalt von W ≤ 4 % und vorzugsweise W ≤ 2,5 % haben.

Nach dem Aushärtungsprozess werden die Pellets durch schonende schlagende und brechende Zerkleinerung auf die gewünschte Länge eingekürzt. Das bei der nachfolgenden Klassierung anfallende Unter- und Überkorn wird durch geeignete Kreislaufschaltung dem Pellier- bzw. dem Zerkleinerungsprozess zugeführt. Die Pellets werden gekühlt und können bei Bedarf zur weiteren Verbesserung der Oberflächeneigenschaften mit geeigneten Stoffen konditioniert werden.

### Beispiel 1

Feinkörniges Ammoniumsulfat mit einer Körnung von 0 bis 1 mm und einem Wassergehalt von W = 0,6 % wird im Eirichmischer zunächst mit 6 Ma-% Tonpulver mit einer Körnung von 0 bis 0,2 mm und einen Wassergehalt von W = 4,1 % vermischt. Der Ton wird bei der Zudosierung in zerstäubter Form über einen Zeitraum von 90 s zugegeben. Gleich danach erfolgt die Zugabe von 5 Ma-% Wasser zur Umwandlung des Tones in einen partiell teigigen Zustand mit guter Gleitmittelwirkung. Das Wasser wird mit einer Schlickdüse in fein verdüster Form über einen Zeitraum von 60 s zudosiert. Das Mischgut besteht insgesamt aus 91 Ma-% Ammoniumsulfat, 6 Ma-% Tonpulver und 5 Ma-% Wasser, wobei das Waser nahezu ausschließlich vom Ton absorbiert wurde. Die Gesamtmischdauer beträgt 180 s. Das Mischgut hat einen Wassergehalt von W = 5,4 %. Bei geringer Unterschreitung dieses Wassergehaltes entstehen bei dieser Mischgutzusammensetzung Pellets in schlechter Qualität, weil der Ton zu trocken ist. Eine schlechte Pelletqualität entsteht aber auch bei geringer Überschreitung dieses Mischgutwassergehaltes, weil dann zu viel Wasser vom Ammoniumsulfat aufgenommen wird.

Das Mischgut wird durch Druckformung mit einer Flachmatrizen-Pelletpresse zu Pellets mit einem Durchmesser von 3 mm verdichtet. Nach der Trocknung der Pellets mit 60° C warmer Luft auf einen Restwassergehalt von W = 2,1 % zeichnen sich diese durch eine hohe Sturzfestigkeit von St 2 (300) = 98,0 % aus. Überraschend ist auch die geringe Empfindlichkeit der Pellets gegenüber erhöhter Luftfeuchtigkeit. Die Pellets mit einem Wassergehalt von W = 2,1 % nehmen nach einer Lagerungsdauer von 24 Std. im Klimaprüfschrank bei einer Lufttemperatur von 20 % und einer relativen Luftfeuchtigkeit von 80 % nur 0,07 % Wasser auf. Die Pellets sind auch nach einer Lagerungsdauer von 5 Tagen im Klimaprüfstand trotz der hohen Luftfeuchtigkeit nicht untereinander erkennbar verklebt. Das feinkörnige Ammoniumsulfat war unter gleichen Lagerbedingungen an der Oberfläche stark verkrustet.

### Beispiel 2

Feinkörniges Ammoniumsulfat mit einer Körnung von 0 bis 1 mm und einem Wassergehalt von W = 0,6 % wird im Eirichmischer zunächst mit 5 Ma-% Roggenvollkornmehl mit einer Körnung von 0 bis 0,2 mm und einem Wassergehalt W = 12 % vermischt. Das Mehl wird bei der Zudosierung in zerstäubter Form über einen Zeitraum von 90 s zugegeben. Gleich danach erfolgt die Zugabe von 3 Ma-% fein verdüstes Wasser über einen Zeitraum von 60 s. Das Mischgut besteht insgesamt aus 92 Ma-% trockenem Ammoniumsulfat, 5 Ma-% Roggenvollkornmehl und 3 Ma-% Wasser, wobei das Wasser nahezu ausschließlich vom Mehl aufgenommen wird. Die Gesamtmischdauer beträgt 180 s. Das Mischgut hat einen Wassergehalt von W = 3,6 %.

Das Mischgut wird durch Druckformung mit der Flachmatrizen-Pelletpresse zu Pellets mit einem Durchmesser von 4 mm verdichtet. Nach der Trocknung der Pellets auf einen Restwassergehalt von W = 0,9 % haben diese eine hohe Sturzfestigkeit von St 2 (300) = 99,4 %. Nach einer Lagerungsdauer von 5 Tagen in einem Raum mit sehr hoher Luftfeuchtigkeit war keine Verklebung der Pellets untereinander feststellbar.

Analog positive Ergebnisse wurden unter sonst gleichen Prozessbedingungen bei der Vermischung des Ammoniumsulfates z.B. mit 8 Ma-% Weizengrießkleie oder 6 Ma-% Weizenvollkornmehl oder 6 Ma-% Reisvollkornmehl oder 8 Ma-% Weizenschrotkleie erzielt, wenn der danach zugesetzte Wasseranteil jeweils 3 Ma-% beträgt.

### Beispiel 3

Feinkörniges Ammoniumsulfat mit einer Körnung von 0 bis 1 mm und einem Wassergehalt von W = 0,6 % wird zunächst mit 25 % Rohfeinkohle mit einer Körnung von 0 bis 0,5 mm und einem Wassergehalt von W = 54,0 % aus dem Niederlausitzer Kohlerevier vermischt. Das entspricht einer wasserfreien Kohlemenge von 11,5 %. Die Rohfeinkohle wird in zerstäubter Form über einen Zeitraum von 100 s zugegeben. Gleich danach erfolgt im gleichen Eirichmischer die Zugabe von 1,5 Ma-% Wasser in fein verdüster Form über einen Zeitraum von 50 s. Die Gesamtmischdauer beträgt 180 s. Das Mischgut wird danach in 4 mm-Pellets geformt und verdichtet. Nach der Trocknung der Pellets auf einen Restwassergehalt von W = 3,1 % haben diese eine sehr hohe Sturzfestigkeit von St 2 (300) = 97,8 %. Bei der Lagerung in einem Raum mit sehr hoher Luftfeuchtigkeit war nach 10 Tagen noch keine Verkrustung feststellbar.

## Patentansprüche

1. Verfahren zur Granulierung von Ammoniumsulfat und ammoniumsulfatreichen mineralischen Düngemitteln **dadurch gekennzeichnet, dass**
a) das feinkörnige Ammoniumsulfat in einem ersten Schritt unter Einsatz von Mischern mit hoher Turbulenz mit feinkörnigen anorganischen und/oder organischen Hilfsstoffen, die Hydroxyl-oder Carboxylgruppen enthalten und die im primären feinkörnigen Zustand hygroskopisch sind und die nach dosierter Befeuchtung als Gleitmittel wirksam werden, vermischt werden, wobei als feinkörnige anorganische und/oder organische Hilfsstoffe gut bindungsfähige Tone, Mehle aus Getreide, Kleie, erdige feinkörnige Weichbrauenkohlen in Form von nicht getrockneter Rohkohle, zu Pulver zerkleinerte ausgelaugte Zuckerrübenschnitzel und/oder getrocknetes Grüngut, jeweils allein oder als Stoffgemisch zugesetzt werden, wobei der Anteil der pulverförmigen Hilfsstoffe bei Zusatz von Tonpulver 4 bis 10 Masse %, beim Zusatz von Getreidemehlen oder Getreidekleien 3 bis 12 Masse % und bei Zusatz von nicht getrockneter Rohfeinkohle 15 bis 30 Masse % beträgt,
b) das mit den feinkörnigen Hilfsstoffen umhüllte Ammoniumsulfat in einem folgenden zweiten Schritt unter Einsatz von Mischern mit hoher Turbulenz mit fein verdüstem Wasser befeuchtet wird, so dass die Hilfsstoffe in einen partiell teigigen Zustand mit Gleitmitteleigenschaften überführt werden, wobei der Wasserbedarf bis zu 6 Masse %, beim Zusatz von Tonpulver mit einem Wassergehalt von W = 4 % etwa 0,8 bis 1,0 Prozent Wasser pro Prozent Ton, beim Zusatz von Getreidemehlen und/oder Getreidekleie mit einem Wassergehalt von W = 10 % etwa 0,3 bis 1,0 Prozent Wasser pro Prozent Mehl oder Kleie und beim Zusatz von Rohfeinkohle mit einem Wassergehalt von W = 50 bis 55 % etwa 0,03 bis 0,1 Prozent Wasser pro Prozent Rohkohle beträgt,
c) das nach a) und b) vorbehandelte Ammoniumsulfat mit einer Flachmatrizen-Pelletpresse einer Druckformung und Pressverdichtung unterzogen wird und Pelletstränge mit glatter, dichter Zylinderoberfläche entstehen,
d) die im Schritt c) erzeugten Pellets durch eine Kaltbelüftung oder bei Trocknungstemperaturen ≤ 75 °C getrocknet und ausgehärtet werden und ein fester Granulatverbund entsteht,
e) die ausgehärteten zylinderförmigen Pelletstränge durch Brechen auf die gewünschte Granulatlänge gebracht werden.

2. Verfahren nach Anspruch 1 **dadurch gekennzeichnet, dass** der Anteil der Hilfsstoffe bei Zusatz von Tonpulver 6 Masse %, bei Zusatz von Getreidemehl oder Getreidekleie 5 bis 8 Masse % und bei Zusatz von nicht getrockneter Rohfeinkohle 20 bis 30 % beträgt.

3. Verfahren nach Anspruch 1 oder 2 **dadurch gekennzeichnet, dass** für die homogene Verteilung des zunächst zugegebenen feinkörnigen Hilfsstoffes und des anschließend zugegebenen Wassers im Mischgut solche Turbulenzmischer zum Einsatz kommen, in denen das Mischgut mit hoher Geschwindigkeit, hohem Kontaktdruck zwischen den Partikeln sowie starker Relativbewegung zwischen den Partikeln anhaltend bewegt wird.

4. Verfahren nach Anspruch 3 **dadurch gekennzeichnet, dass** vorzugsweise ein Eirichmischer eingesetzt wird.

5. Verfahren nach Anspruch 1 bis 4 **dadurch gekennzeichnet, dass** dem Mischer zuerst die Hilfsstoffe in zerstäubter Form und danach das Wasser in fein verdüster Form oder durch Dampfkondensation jeweils über einen längeren Zeitraum zudosiert werden und die Dosierdauer in beiden Fällen mindestens 25 % der Gesamtmischdauer von etwa 2 bis 5 Minuten beträgt.

6. Verfahren nach Anspruch 1 **dadurch gekennzeichnet, dass** der Durchmesser der Pellets durch Veränderung der Lochweite der Formkanäle in den Flachmatrizen und die Länge der Granulate vorzugsweise durch schonende schlagende und brechende Beanspruchung der getrockneten Pellets bedarfsgerecht eingestellt wird.

7. Verfahren nach Anspruch 1 **dadurch gekennzeichnet, dass** für die Trocknung der Pellets alle Kontakt- und/oder Konvektionstrockner mit einer schonenden mechanischen Beanspruchung des Trocknungsgutes und mit schonenden Aufheizregime geeignet sind.

8. Verfahren nach Anspruch 1 und 7 **dadurch gekennzeichnet, dass** die Trocknung bis auf Restrwassergehalte von ≤ 4 %, vorzugsweise ≤ 2,5 % erfolgt.

9. Verfahren nach Anspruch 1, 6, 7 und 8 **dadurch gekennzeichnet, dass** die gebrochenen ausgehärteten Pellets einem Klassierprozess unterzogen werden, um Über- und Unterkorn abzutrennen.

## Claims

1. Process for the granulation of ammonium sulfate and ammonium-sulfate-rich mineral fertilizers, **characterized in that**
a) the fine-grained ammonium sulfate, in a first step, with the application of mixers with high turbulence, is mixed with fine-grained inorganic and/or organic auxiliary materials, which include hydroxyl or carboxyl groups and which are hygroscopic in the primary, fine-grained status, and which are effective as lubricants after dosed moistening, where, as fine-grained inorganic and/or organic auxiliary materials, binding-capable clay, flour from grain, bran, earthy fine-grained soft brown coal in the form of non-dried rough coal, sugar beet cossettes and/or dried green goods comminuted to powder, are added alone or as a material mixture in each case, where the content of the powdered auxiliary materials with the addition of clay powder is 4 to 10 mass%, with the additional of grain flour or grain bran is 3 to 12 mass% and with the addition of non-dried raw nutty slack is 15 to 30 mass%,
b) the ammonium sulfate covered with the fine-grained auxiliary materials, in a following second step, with the application of mixers with high turbulence, is moistened in finely atomized water so that the auxiliary materials are transferred into a partially doughy state with lubricant properties, where the water requirement is up to 6 mass%, with the addition of clay powder with a water content of W = 4% is about 0.8 to 1.0 percent water per percent clay, with the addition of grain flour and/or grain bran with a water content of W = 10% is about 0.3 to 1.0 percent water per percent flour or bran, and with the addition of raw nutty slack with a water content of W = 50 to 55% is about 0.03 to 0.1 percent water per percent raw coal,
c) the ammonium sulfate, preprocessed according to a) and b), is subject to a pressure formation and pressing compression with a flat-matrix pellet press, and pellet sections arise with a smooth, sealed cylinder surface,
d) the pellets generated in step c) are dried and hardened through a cold ventilation or with drying temperatures ≤ 75°C and a solid granulate compound is formed,
e) the hardened cylinder-shaped pellet sections are brought to the required granulate length by breaking.

2. Process according to Claim 1, **characterized in that** the content of the auxiliary materials with the addition of clay powder of 6 mass%, with the addition of grain flour or grain bran of 5 to 8 mass% and with the addition of non-dried raw nutty slack, is 20 to 30%.

3. Process according to Claims 1 or 2, **characterized in that**, for the uniform distribution of the initially-added fine-grained auxiliary material and the water then added into the mix, such turbulence mixers are used in which the mix is continuously moved with high speed, with high contact pressure between the particles, as well as with strong relative movement between the particles.

4. Process according to Claim 3, **characterized in that** an Eirich mixer is employed with preference.

5. Process according to Claims 1 to 4, **characterized in that** the auxiliary materials in powdered form, and after that the water in finely atomized form or through steam condensation, are first added to the mixer over a longer period in each case, and the dosing duration in both cases is at least 25% of the total mixing duration of approx. 2 to 5 minutes.

6. Process according to Claim 1, **characterized in that** the diameter of the pellets is setadjusted demand-driven through changing the hole diameter of the mold channels in the flat matrices and the length of the granulates, preferably through mild impact and breaking stressing of the dried pellets.

7. Process according to Claim 1, **characterized in that**, for the drying of the pellets, all contact and/or convection dryers are suitable which have a mild mechanical stressing level of the dried goods and a careful heating regime.

8. Process according to Claims 1 and 7, **characterized in that** the drying is implemented up to residual water content ≤ 4%, preferably ≤ 2.5%.

9. Process according to Claims 1, 6, 7 and 8, **characterized in that** the broken, hardened pellets are subjected to a classification process, in order to separate oversized and undersized grains.

## Revendications

1. Procédé de granulation de sulfate d'ammonium et d'engrais minéraux riches en sulfate d'ammonium, **caractérisé en ce que**
a) le sulfate d'ammonium à fine granulométrie est, au cours d'une première étape et par utilisation de mélangeurs à haute turbulence, mélangé à des adjuvants anorganiques et/ou organiques à fine granulométrie qui contiennent des groupes hydroxyles ou carboxyles, qui sont hygroscopiques à l'état de fine granulométrie primaire et qui sont efficaces en tant qu'agents de glissement après humidification dosée, les adjuvants anorganiques et/ou organiques à fine granulométrie ajoutés étant des argiles, des farines de céréales, du son, des lignites tendres terreux à fine granulométrie sous la forme de charbon brut non séché, des cossettes de betterave à sucre lessivées et broyées en poudre et/ou des déchets verts séchés, seuls ou ajoutés en tant que mélange de substances, la part d'adjuvants pulvérulents étant de 4 à 10 % en masse lorsque l'on ajoute de la poudre d'argile, de 3 à 12 % en masse lorsque l'on ajoute des farines de céréales ou du son de céréales et de 15 à 30 % en masse lorsque l'on ajoute du charbon fin brut non séché,
b) le sulfate d'ammonium enveloppé par les adjuvants à fine granulométrie est, au cours d'une deuxième étape suivante et par utilisation de mélangeurs à haute turbulence, humidifié avec de l'eau finement évaporée faisant que les adjuvants passent dans un état partiellement pâteux avec des propriétés d'agents de glissement, le besoin en eau allant jusqu'à 6 % en masse, étant d'environ 0,8 à 1,0 pour-cent d'eau par pour-cent d'argile lorsque l'on ajoute de la poudre d'argile avec une teneur en eau de W = 4 %, d'environ 0,3 à 1,0 pour-cent d'eau par pour-cent de farine ou de son lorsque l'on ajoute des farines de céréales et/ou du son de céréales avec une teneur en eau de W = 10 % et d'environ 0,03 à 0,1 pour-cent d'eau par pour-cent de charbon brut lorsque l'on ajoute du charbon fin brut avec une teneur en eau de W = 50 à 55 %,
c) le sulfate d'ammonium prétraité selon a) et b) est soumis, avec une presse à granulés à matrice plate, à un façonnage sous pression et un compactage à la presse et des faisceaux de granulés d'une surface cylindrique lisse et dense se forment,
d) les granulés générés au cours de l'étape c) sont séchés et durcis par ventilation d'air froid ou à des températures de séchage ≤ 75 °C, et une association de granulés se forme,
e) les faisceaux de granulés cylindriques durcis sont mis à la longueur de granulés souhaitée par concassage.

2. Procédé selon revendication 1, **caractérisé en ce que** la part des adjuvants est de 6 % en masse lorsque l'on ajoute de la poudre d'argile, de 5 à 8 % en masse lorsque l'on ajoute de la farine de céréales ou du son de céréales et de 20 à 30 % lorsque l'on ajoute du charbon fin brut non séché.

3. Procédé selon revendication 1 ou 2, **caractérisé en ce que**, pour la répartition homogène de l'adjuvant à fine granulométrie d'abord ajouté et de l'eau ajoutée ensuite dans le produit à mélanger, on utilise des mélangeurs à turbulence dans lesquels le produit à mélanger est mis en mouvement continu à grande vitesse, sous une pression de contact élevée entre les particules et selon un mouvement relatif puissant entre les particules.

4. Procédé selon revendication 3, **caractérisé en ce que** l'on utilise de préférence un mélangeur Eirich.

5. Procédé selon revendications 1 à 4, **caractérisé en ce que** l'on ajoute au mélangeur d'abord les adjuvants sous la forme pulvérisée, puis l'eau sous la forme finement évaporée ou par condensation de vapeur sur une période prolongée et que la durée de dosage est égale, dans les deux cas, à 25 % au moins de la durée de mélange totale allant de 2 à 5 minutes.

6. Procédé selon revendication 1, **caractérisé en ce que** le diamètre des granulés est réglé en fonction des besoins, par modification du diamètre des trous des canaux de forme des matrices plates, et que la longueur des granulés est de préférence réglée en soumettant avec ménagement les granulés séchés à des chocs et un concassage.

7. Procédé selon revendication 1, **caractérisé en ce que**, pour le séchage des granulés, tous les séchoirs par contact et/ou par convection, avec une sollicitation mécanique du produit à sécher en ménageant ce dernier et avec un régime de mise en température ménageant le produit à sécher, conviennent.

8. Procédé selon revendications 1 et 7, **caractérisé en ce que** le séchage s'effectue jusqu'à des teneurs résiduelles en eau ≤ 4 %, de préférence ≤ 2,5 %.

9. Procédé selon revendications 1, 6, 7 et 8, **caractérisé en ce que** les granulés durcis et concassés sont soumis à un processus de tri afin de séparer le grain supérieur du grain inférieur.
